# EUROPEAN PATENT APPLICATION

(11) **EP 4 124 566 A1**
(43) Date of publication of application: **01.02.2023**
(21) Application number: 21382697.7
(22) Date of filing: 27.07.2021
(51) Int. Cl.: B64C 9/06, B64C 9/02, B64C 9/18

(54) **MOVABLE COMPONENT FOR AIRCRAFTS**

(71) Applicant: Airbus Operations, S.L.U., 28906 Getafe (Madrid) (ES)
(72) Inventor: LLAMAS SANDIN, Raul Carlos, 28906 GETAFE (Madrid) (ES); BAILEY NOVAL, Nicolas, 28906 GETAFE (Madrid) (ES)
(74) Representative: Herrero & Asociados, S.L.

(57) **Abstract**

The movable component for aircrafts comprises a fixed portion (1); and a movable portion (2), that is rotatable and/or extendable with respect to the fixed portion (1), said fixed portion (1) and said movable portion (2) being attached by an attachment element (3), wherein said attachment element (3) is placed inside the fixed portion (1) or inside the movable portion (2).

It permits to provide a movable component for aircrafts that is simple and with no external driving elements and supports, so that the performance of the component is not affected.

## Description

The present invention refers to a movable component for aircrafts, comprising a rotatable and/or extendable portion, such as flaps, ailerons, elevator rudders, among others.

### Background of the invention

The aircrafts comprise movable components, such as flaps, ailerons, elevator rudders, etc. that are able to change the geometry of the aircraft to control it or modify its performances.

Usually there are two types of movable components: rotatable components and extendable components.

Rotatable components include elevators, rudders and ailerons, and with their movements they are able to modify the camber of the cross sections modifying the forces on the components.

Extendable components include flaps, and can change the area of the components, changing the performance of these components.

These movable components comprise a fixed portion and a movable portion, this movable portion being rotatable or extendable.

For moving this movable portion, the components comprise complex driving elements and supports that are placed outside the component, generating resistance, and affecting the performance of the component.

### Description of the invention

Therefore, one purpose of the present invention is to provide a movable component for aircrafts that is simple and with no external driving elements and supports, so that the performance of the component is not affected.

With the movable component for aircrafts according to the present invention it is possible to solve said drawbacks, providing other advantages that are described below.

The movable component for aircrafts according to the present invention comprises:
- a fixed portion; and
- a movable portion, that is rotatable and/or extendable with respect to the fixed portion,
said fixed portion and said movable portion being attached by an attachment element, said attachment element being placed inside the fixed portion or inside the movable portion.

According to a preferred embodiment, the attachment element is a hinge.

Advantageously, the movable portion is both rotatable and extendable with respect to the fixed portion.

The movable component according to the present invention provides an extendable or rotative relative movement with simple attachments and a single actuation, which are located inside the component itself.

The movable component according to the present invention permits to remove any external attachments of the movable portions, reducing drag, and improving performance.

### Brief description of the drawings

For a better understanding the above explanation and for the sole purpose of providing an example, some non-limiting drawings are included that schematically depict a practical embodiment.
Figure 1 is a perspective view of a movable component for aircrafts of the present invention, according to a first embodiment, in a first position;
Figure 2 is a perspective view of a movable component for aircrafts of the present invention, according to a first embodiment, in a second position;
Figure 3 is a perspective view of a movable component for aircrafts of the present invention, according to a second embodiment, in a first position; and
Figure 4 is a perspective view of a movable component for aircrafts of the present invention, according to a second embodiment, in a second position.

### Description of preferred embodiments

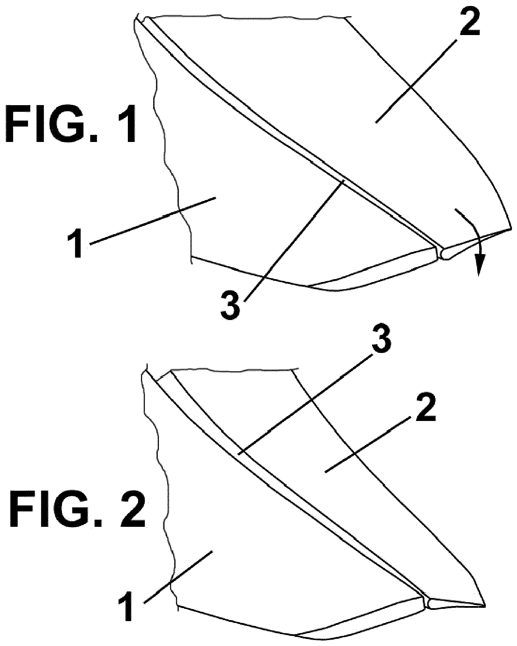

In figures 1 and 2 a first embodiment of the movable component for aircrafts is shown. According to this first embodiment, the movable component is aileron for an aircraft.

The aileron comprises a fixed portion 1 and a movable portion 2 attached to each other by an attachment element 3, which is preferably a hinge, that is placed inside the fixed portion 1 or the movable portion 2. The fixed portion 1 defines a hinge line, along which the movable portion 2 can rotate.

In figure 1 the movable portion 2 is in a first position, in which this movable portion 2 is substantially aligned with the fixed portion 1.

In figure 2 the movable portion 2 is in a second position, in which this movable portion 2 is rotated with respect to the fixed portion 1.

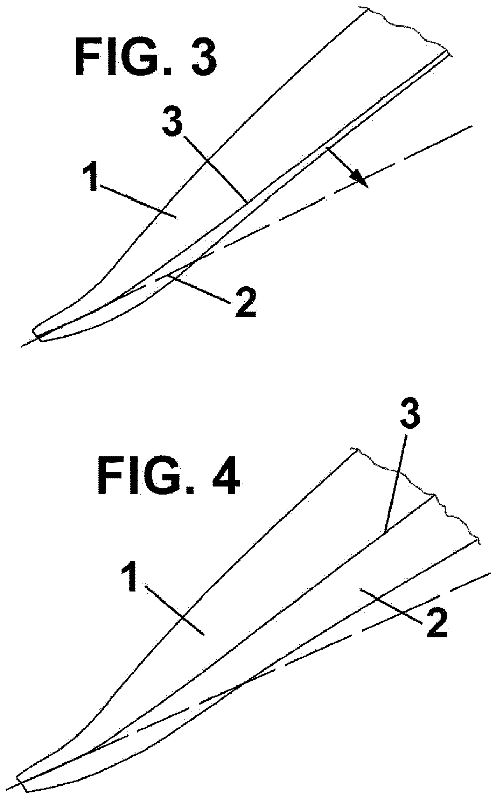

In figures 3 and 4 a second embodiment of the movable component for aircrafts is shown. According to this second embodiment, the movable component is flap for an aircraft.

For simplicity reasons in this embodiment, the same numeral references than in the previous embodiment are used.

Also in this embodiment, the flap comprises a fixed portion 1 and a movable portion 2 attached to each other by an attachment element 3, which is preferably a hinge, that is placed inside the fixed portion 1 or the movable portion 2. The fixed portion 1 defines a hinge line, along which the movable portion 2 can extend and rotate.

In figure 3 the movable portion 2 is in a first position, in which this movable portion 2 is substantially aligned with the fixed portion 1.

In figure 4 the movable portion 2 is in a second position, in which this movable portion 2 is extended and rotated with respect to the fixed portion 1.

Even though reference has been made to a specific embodiment of the invention, it is obvious for a person skilled in the art that the movable component of aircrafts described herein is susceptible to numerous variations and modifications, and that all of the details mentioned can be substituted for other technically equivalent ones without departing from the scope of protection defined by the attached claims.

## Claims

1. Movable component for aircrafts, comprising:
- a fixed portion (1); and
- a movable portion (2), that is rotatable and/or extendable with respect to the fixed portion (1),
said fixed portion (1) and said movable portion (2) being attached by an attachment element (3),
**characterized in that** said attachment element (3) is placed inside the fixed portion (1) or inside the movable portion (2).

2. Movable component for aircrafts according to claim 1, wherein the attachment element (3) is a hinge.

3. Movable component for aircrafts according to claim 1, wherein the movable portion (2) is both rotatable and extendable with respect to the fixed portion (1).
